# FASCICULE DE BREVET EUROPEEN

(11) **EP 3 894 174 B1**
(45) Date de publication et mention de la délivrance du brevet: **17.05.2023**
(21) Numéro de dépôt: 19839345.6
(22) Date de dépôt: 02.12.2019
(51) Int. Cl.: B29C 43/46, B29D 30/00, B29C 43/58, B32B 37/18, B29C 65/00, B29C 65/56, B29C 43/30, B29C 43/44, B32B 37/00, B32B 38/06, B29C 65/78, B29D 30/42, B29L 9/00, B29K 7/00, B29K 21/00

(54) **SYSTÈME ET PROCÉDÉ D'ABOUTAGE DE BANDES DE CAOUTCHOUC POUR ALIMENTER UNE EXTRUDEUSE**
VORRICHTUNG UND VERFAHREN ZUM STUMPFSCHWEISSEN VON KAUTSCHUKBÄNDERN ZUR BESCHICKUNG EINES EXTRUDERS
SYSTEM AND METHOD FOR BUTT-JOINING RUBBER STRIPS TO SUPPLY AN EXTRUDER

(30) Priorité: 14.12.2018 FR 1872928; 29.01.2019 FR 1900771
(43) Date de publication de la demande: 20.10.2021
(73) Titulaire: COMPAGNIE GENERALE DES ETABLISSEMENTS MICHELIN, 63000 Clermont-Ferrand (FR)
(72) Inventeur: FERJOUX, Eddy, 63040 CLERMONT-FERRAND Cedex 9 (FR); LECHEVALIER, Nicolas, 63040 CLERMONT-FERRAND Cedex 9 (FR); MIOCHE, Gilles, 63040 CLERMONT-FERRAND Cedex 9 (FR)
(74) Mandataire: Roussy, Delphine
(86) Numéro de dépôt international: PCT/FR2019/052883
(87) Numéro de publication internationale: WO 2020/120873

(56) Documents cités:
- JP-A- 2004 142 219
- US-A- 5 221 409
- US-A1- 2008 017 297
- US-A1- 2017 072 652
- US-A1- 2018 244 433
- US-B1- 6 533 891

## Description

### Domaine Technique

L'invention concerne un système d'alimentation qui permet d'alimenter une extrudeuse à partir de plusieurs bandes de caoutchouc. Plus particulièrement, l'invention concerne un système d'alimentation d'une extrudeuse qui réalise l'aboutage de gomme en continu en évitant les trous d'alimentation.

### Technique antérieure

Dans la fabrication de pneumatiques, on exige que le pneumatique ait diverses performance (par exemple une résistance au roulement réduite, une meilleure résistance à l'usure, une adhérence comparable dans des conditions humides et sèches, un kilométrage estimé, etc.). Les pneumatiques sont donc composés de différents types de mélanges de caoutchouc ayant des propriétés essentielles au fonctionnement du pneumatique lui-même. Pour garantir qu'un pneumatique commercialisable présente des performances attendues, un mélange de caoutchouc peut être sélectionné parmi une variété de mélanges de caoutchouc, ayant chacun différents ingrédients mélangés en des quantités différentes et dérivés d'une variété de séquences de production.

Les mélanges de caoutchouc sont souvent livrés aux extrudeuses sous forme de bandes en zigzag ou en wig-wag. Deux ou plusieurs mélanges de caoutchouc différents sont souvent introduits manuellement dans une portion d'alimentation d'une extrudeuse (comme utilisé ici, le terme « extrudeuse » fait référence à une variété d'extrudeuses connues, y compris, sans limitation des extrudeuses à vis, des extrudeuses à torpilles et d'autres extrudeuses équivalentes). Le fonctionnement optimal des extrudeuses dépend de la continuité de la composition du matériau caoutchouteux et de la continuité de l'opération d'alimentation à laquelle la composition est soumise. Un exemple d'un système automatisé pour alimenter des extrudeuses est divulgué par le brevet US 9,919,468.

En outre, la confection des nappes pourrait inclure un procédé destiné à la formation d'un joint bout à bout des extrémités d'une première nappe et une deuxième nappe (voir, par exemple, la publication US2017/0072652).

Bien que de multiples types de mélanges de caoutchouc soient envisagés dans les processus de production de pneumatiques, il existe une implantation optimisée des équipements qui permettent d'alimenter de manière automatisée des extrudeuses. La nécessité d'une alimentation uniforme doit être respectée en gardant un fonctionnement essentiellement automatique et sans dégradation de l'homogénéité des bandes de caoutchouc résultantes. De plus, la possibilité de créer des boucles de caoutchouc (et créer donc d'un stock tampon) permet d'abouter les produits sans arrêt prolongé des convoyeurs. Ainsi, l'invention divulguée propose un système qui réalise l'assemblage, de manière contrôlée et uniforme, de deux ou plusieurs bandes de caoutchoucs sans perforation de celles-ci.

### Résumé de l'invention

L'invention concerne un système d'aboutage de deux ou plusieurs bandes de caoutchouc sélectionnées en fonction d'une recette de mélange de caoutchouc prédéterminée pour alimenter au moins une extrudeuse avec une bande complexée de matériau caoutchouteux à partir des bandes de caoutchouc aboutées. Le système comprend au moins un convoyeur qui réalise le transport des bandes de caoutchouc d'une entrée du système vers une sortie du système d'aboutage, et une armature qui supporte le convoyeur de manière opérationnelle pour permettre le transport en continu des bandes de caoutchouc et pour permettre aussi l'aboutage simultané des bandes de caoutchouc alimentées au système. Le système comprend aussi un système de rouleaux qui réalise l'aboutage des bandes de caoutchouc sans perçage, le système de rouleaux comprenant au moins un rouleau supérieur et un rouleau inférieur , chaque rouleau avec un centre à travers lequel un axe de rotation du rouleau s'étend et chaque rouleau avec un corps cylindrique de diamètre prédéterminé qui s'étend perpendiculairement et qui tourne autour de son axe de rotation par rapport à l'armature qui supporte le système de rouleaux , les deux rouleaux étant disposés de sorte que les deux axes de rotations restent dans le même plan avec les axes parallèles l'un par rapport à l'autre, et le rouleau supérieur avec une surface dentée le long de laquelle une longueur de contact est établie entre une première bande de caoutchouc alimentée et la surface dentée lors du passage de la première bande de caoutchouc à travers le système de rouleaux , la surface dentée comprenant plusieurs dents consécutivement disposées le long d'un axe commun défini par rapport à deux extrémités opposées du corps cylindrique du rouleau supérieur.

Conformément à l'invention, le rouleau inférieur comprend une surface lissée le long de laquelle une longueur de contact est établie entre une deuxième bande de caoutchouc alimentée et la surface lissée lors du passage de la deuxième bande de caoutchouc à travers le système de rouleaux , la surface lissée comprenant une surface circonférentielle qui présente une surface d'appui entre deux extrémités opposées du corps cylindrique du rouleau inférieur.

Dans certains modes de réalisation du système, le rouleau inférieur comprend une surface dentée complémentaire le long de laquelle une longueur de contact est établie entre la deuxième bande de caoutchouc alimentée et la surface dentée du rouleau inférieur lors du passage de la deuxième bande de caoutchouc à travers le système de rouleaux , la surface dentée complémentaire comprenant plusieurs dents consécutivement disposées le long d'un axe commun défini par rapport aux extrémités opposées du corps cylindrique du rouleau inférieur de façon complémentaire par rapport aux dents du rouleau supérieur.

Dans certains modes de réalisation du système, les deux rouleaux maintenant un écartement ajustable entre la surface dentée du rouleau supérieur et une surface du rouleau inférieur. Dans certains modes de réalisation du système , le convoyeur comprend un tapis d'entrée qui réalise l'entrée des bandes de caoutchouc à l'entrée du système et un tapis de sortie qui réalise le transport des bandes de caoutchouc aboutées de la sortie du système vers un ou plusieurs installations en aval du système.

Dans certains modes de réalisation du système, le système comprend en outre une entrée d'alimentation à laquelle les bandes de caoutchouc sont fournies au système par rapport à l'armature qui supporte 1 entrée d'alimentation.

L'invention concerne aussi un procédé d'aboutage des bandes de caoutchouc réalisé par le système divulgué. Le procédé comprenant les étapes suivantes :
l'étape de fourniture d'au moins une première bande de caoutchouc et une deuxième bande de caoutchouc, chaque bande de caoutchouc avec les propriétés matérielles choisies en fonction d'une recette de mélange de caoutchouc sélectionnée ;
l'étape de la mise en rotation des rouleaux supérieur et inférieur dans des sens opposés ; l'étape de la mise en route du convoyeur ;
l'étape de l'alimentation des deux bandes de caoutchouc sur le convoyeur à l'entrée du système ;
l'étape de l'aboutage des deux bandes de caoutchouc pour former la bande complexée, cette étape comprenant l'étape du passage simultané des deux bandes de caoutchouc entre le rouleau supérieur et le rouleau inférieur de manière à conserver un contact uniforme entre une surface opposée de la première bande de caoutchouc et une surface opposée de la deuxième bande de caoutchouc sans perçage de l'une de l'autre ; et
l'étape de la sortie de la bande complexée du système de rouleaux.

Dans certains modes de réalisation du procédé, l'étape d'aboutage comprend l'aboutage de la fin de la première bande de caoutchouc avec le début de la deuxième bande de caoutchouc sans interruption du convoyeur et de sorte que une jonction effectuée entre la fin de la première bande de caoutchouc et le début de la deuxième bande de caoutchouc ne perce ni la première bande de caoutchouc ni la deuxième bande de caoutchouc.

Dans certains modes de réalisation du procédé, le procédé comprend en outre l'étape d'ajustement d'un écartement entre le rouleau supérieur et le rouleau inférieur.

Dans certains modes de réalisation du procédé, le procédé comprend en outre l'étape de détection d'une épaisseur de la bande complexée sortant le système de rouleaux.

D'autres aspects de l'invention vont devenir évidents grâce à la description détaillée suivante.

### Brève description des dessins

La nature et les divers avantages de l'invention vont devenir plus évidents à la lecture de la description détaillée qui suit, conjointement avec les dessins annexés, sur lesquels les mêmes numéros de référence désignent partout des parties identiques, et dans lesquels :
La figure 1 représente une vue en perspective d'un système d'aboutage des bandes de caoutchouc de l'invention.
La figure 2 représente une vue en perspective d'un mode de réalisation d'un système de rouleaux du système d'aboutage de la figure 1.
La figure 3 représente une vue latérale du système de rouleaux de la figure 2.
La figure 3A représente une vue en section transversale de l'ensemble de rouleaux de la figure 3 le long de la ligne A-A.
La figure 4 représente une vue schématique du système de rouleaux des figures 2 à 3A pendant un cycle d'un procédé d'aboutage des bandes de caoutchouc.
La figure 5 représente une vue en perspective d'un autre mode de réalisation du système de rouleaux du système d'aboutage de la figure 1.
La figure 6 représente une vue de dessus du système de rouleaux de la figure 5.
La figure 6A représente une vue en section transversale de l'ensemble de rouleaux de la figure 3 le long de la ligne A'-A'.
La figure 7 représente une vue schématique du système de rouleaux des figures 5 à 6A pendant un cycle d'un procédé d'aboutage des bandes de caoutchouc.
Les figures 8, 8A et 8B représentent des vues en section transversales des bandes de caoutchouc aboutées.
La figure 8C représente une vue en section transversale d'une dent représentative d'un rouleau du système de rouleaux.

### Description détaillée

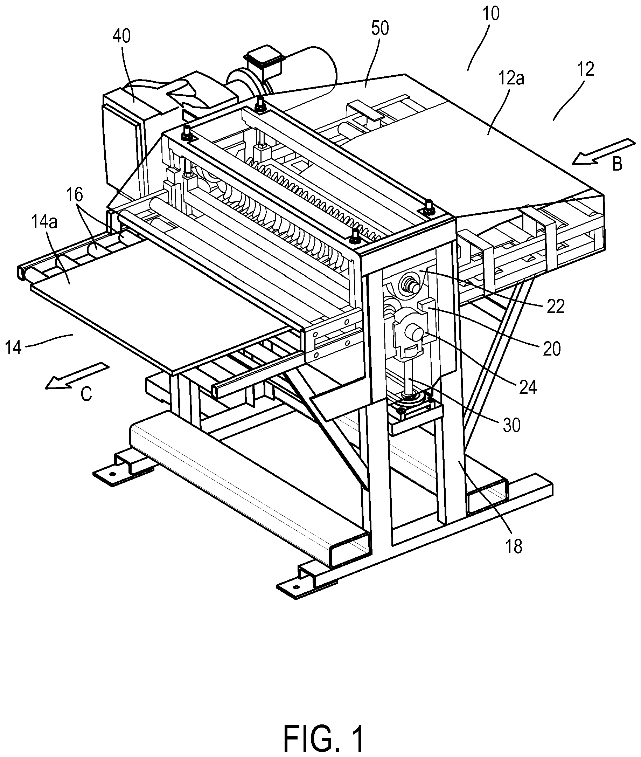

En se référant maintenant aux figures, sur lesquelles les mêmes numéros identifient des éléments identiques, la figure 1 représente un mode de réalisation d'un système d'aboutage (ou « système ») 10 qui alimente au moins une extrudeuse (pas représentée) avec deux ou plusieurs bandes de matériau caoutchouteux. L'extrudeuse peut être choisie parmi des extrudeuses à vis connus qui sont trouvées dans le commerce. Le système 10 peut comprendre une installation d'un système de production de pneumatiques.

Les bandes sont fabriquées des matériaux caoutchouteux différents en fonction d'une recette de mélange de caoutchouc prédéterminée. Chaque bande de caoutchouc peut être fabriquée à partir d'une composition de caoutchouc connue, y compris un caoutchouc diène, c'est-à-dire d'un élastomère quelconque dérivé au moins en partie de monomère diène. Cet élastomère diène peut être sélectionné parmi des polybutadiènes (BR), du caoutchouc naturel (NR), des polyisoprènes synthétiques (IR), des copolymères de butadiène, des copolymères d'isoprène et des mélanges de ces élastomères, de tels copolymères étant choisis parmi les copolymères butadiène-styrène (SBR), des copolymères isoprène-butadiène (BIR), des copolymères isoprène-styrène (SIR), et des copolymères isoprène-butadiène-styrène (SBIR).

Une composition de caoutchouc sélectionnée pour une bande de caoutchouc peut contenir un ou plusieurs élastomères diène ainsi qu'un ou plusieurs additifs couramment employés dans les matrices de caoutchouc destinées à la fabrication de pneumatiques. De telles charges incluent, sans limitation, le noir de carbone, la silice, des agents de couplage, des agents antivieillissement, des antioxydants, des plastifiants, des huiles d'extension, des résines plastifiantes ayant une haute température de transition vitreuse (supérieure à 30° C), des agents améliorant la capacité de traitement des compositions à l'état brut, des résines tackifiantes, des agents anti-réversion, des accepteurs et des donneurs de méthylène, des résines renforçantes, des systèmes de promoteurs d'adhésion connus du type sels de métaux et un système de réticulation ou de vulcanisation. En préparant un mélangeage de deux ou plus bandes de caoutchouc, l'homme du métier sait ajuster la formulation de la composition de caoutchouc de manière à dériver des propriétés souhaitées pour un pneumatique spécifique. Chaque bande de caoutchouc est créée sous la forme d'un élément continu de produit profilé (c'est-à-dire un élément en caoutchouc généralement allongé de largeur et d'épaisseur prédéterminées, qui est destiné à être utilisé dans des pneumatiques et des produits de pneumatiques tels que des doublures intérieures, des parois latérales, des carcasses, des bandes de roulement, etc.). Les bandes de caoutchouc sont fournies sur une ou des palettes connues (pas représentées) et/ou alimentées au système 10 par un ou des moyens manuels ou automatisés (par exemple, un ou des effecteurs de robot) (pas représentés).

Le système 10 comprend au moins un convoyeur qui réalise le transport des bandes de caoutchouc d'une entrée 12 du système vers une sortie 14 du système. Par titre d'exemple, un convoyeur représentatif est fourni qui inclut un tapis d'entrée 12a qui réalise l'entrée des bandes de caoutchouc au système 10 et un tapis de sortie 14a qui réalise le transport des bandes de caoutchouc aboutés du système vers un ou plusieurs installations en aval (par exemple, une ou plus extrudeuses et/ou d'autres mélangeurs). Le tapi d'entrée 12a et le tapis de sortie 14a peuvent comprendre un seul tapis ou plusieurs tapis en mouvement continu grâce à rouleaux 16 connus. Il est entendu que d'autres convoyeurs équivalents peuvent être utilisés (par exemple, un ou des convoyeurs à bande ou à rouleaux ou leurs équivalents connus).

En se référant encore à la figure 1, une armature 18 supporte les tapis 12a, 14a de manière opérationnelle pour permettre le transport en continu des bandes de caoutchouc et pour permettre aussi l'aboutage simultané des bandes de caoutchouc alimentées au système 10. Ensemble avec les tapis 12a, 14a, l'armature 18 supporte un système de rouleaux 20 qui réalise l'aboutage des bandes de caoutchouc sélectionnées. L'armature 18 peut supporter aussi une entrée d'alimentation facultative 50 à laquelle les bandes de caoutchouc sont fournies au système 10. Dans les modes de réalisation du système comprenant l'entrée d'alimentation 22, les bandes de caoutchouc sont guidées vers le système de rouleaux 20 par le tapis d'entrée 12a.

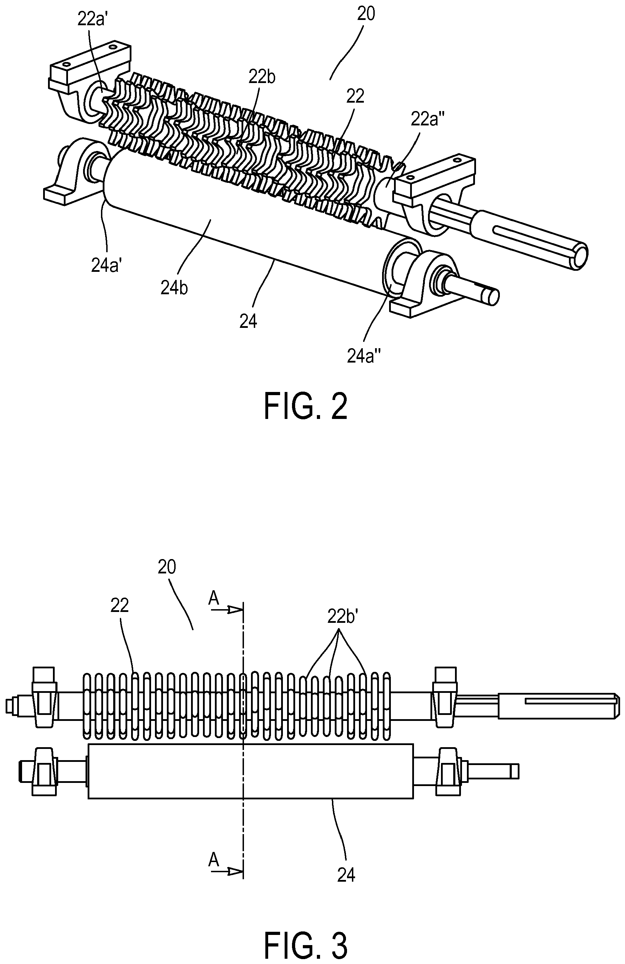

En se référant encore à la figure 1, et en outre aux figures 2 à 4, dans un mode de réalisation de l'invention, le système de rouleaux 20 comprend un rouleau supérieur 22 et un rouleau inférieur 24. Il est entendu qu'un système de rouleaux avec des rouleaux 22, 24 est donné à titre d'exemple et que le système de rouleaux 20 est adaptable pour l'utilisation dans des systèmes d'aboutage existants.

Le rouleau supérieur 22 comprend un corps cylindrique 22a de diamètre prédéterminé qui est choisi en fonction des propriétés des bandes de caoutchouc (y compris, sans limitation, leurs épaisseurs et leurs propriétés matérielles). Le rouleau supérieur 22 présente une surface dentée 22b le long de laquelle une longueur de contact est établie entre une bande de caoutchouc alimentée et la surface dentée lors du passage de la bande de caoutchouc à travers le système de rouleaux 20. La surface dentée 22b comprend plusieurs dents 22b' fixées entre deux extrémités opposées 22a' et 22a" du corps cylindrique 22a. Les dents 22b' sont consécutivement disposées le long d'un axe commun défini par rapport aux extrémités opposées 22a', 22a". La longueur de contact de la surface dentée 22b peut être ajustée en fonction d'une largeur de la bande de caoutchouc. Cette configuration peut prendre une forme d'un pignon à chaine qui a un avantage de faire des indentations dans une surface d'une bande de caoutchouc sans arrachement de la bande de caoutchouc.

Le rouleau inférieur 24 comprend un corps cylindrique 24b de diamètre prédéterminé qui est choisi en fonction des propriétés des bandes de caoutchouc (y compris, sans limitation, leurs épaisseurs et leurs propriétés matérielles). Le rouleau inférieur 24 présente une surface lissée 24b le long de laquelle une longueur de contact est établie entre une bande de caoutchouc alimentée et la surface lissée lors du passage de la bande de caoutchouc à travers le système de rouleaux 20. La surface lissée 24b comprend une surface circonférentielle qui présente une surface d'appui entre deux extrémités opposées 24a' et 24a" du corps cylindrique 24a. La longueur de contact de la surface lissée 24b peut être ajustée en fonction d'une largeur de la bande de caoutchouc. La longueur de contact de la surface lissée 24b peut être aussi ajustée en fonction de la longueur de contact de la surface dentée 22b du rouleau supérieur 22. Chaque rouleau 22, 24 a un centre à travers lequel un axe de rotation du rouleau. Chaque rouleau 22, 24 s'étend perpendiculairement et tourne autour de son axe de rotation par rapport à l'armature 18 qui soutient le système de rouleaux 20. Les rouleaux 22, 24 sont disposés de sorte que les deux axes de rotations restent dans le même plan avec les axes parallèles l'un par rapport à l'autre. Le placement des rouleaux 22, 24 par rapport à l'armature 18 est ajustable selon les propriétés des nappes de caoutchouc à abouter.

Le rouleau supérieur 22 et le rouleau inférieur 24 maintiennent un écartement prédéterminé E₂₀ entre la surface dentée 22b du rouleau supérieur 22 et la surface lissée 24b du rouleau inférieur 24. Cet écartement peut être ajusté en fonction des propriétés matérielles et des épaisseurs des bandes de caoutchouc à abouter pendant un cycle d'un procédé d'aboutage du système 10. Un dispositif d'ajustement 30 est représenté dans la figure 1 qui comprend un moyen connu pour faire cet ajustement de l'écartement (par exemple, par moyen d'un actionnement linéaire, qui peut être effectué par une unité cylindre-piston ou par un autre actionneur connu).

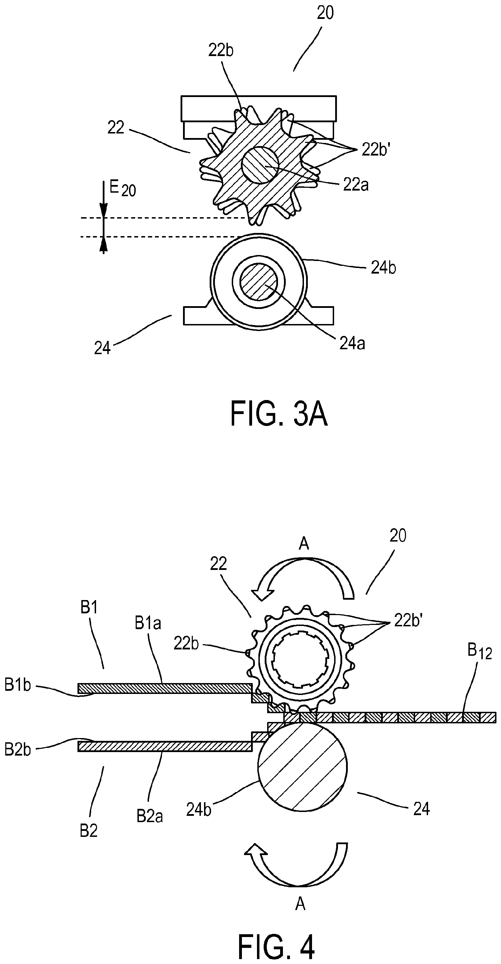

Pendant un procédé d'aboutage des bandes de caoutchouc réalisé par le système 10, un ou des moteurs d'entraînement (représenté dans la figure 1 par le moteur 40) mettent en rotation les deux rouleaux 22, 24 dans des sens opposés (le sens de rotation de chaque rouleau étant indiqué par les flèches A de la figure 4). Chaque rouleau 22, 24 peut être entraîné par un moteur d'entraînement programmable correspondant qui commande une vitesse de rotation pour chaque rouleau (qui peut être, par exemple, une vitesse d'une bande de caoutchouc en mouvement). En variante, un système d'entraînement commun (par exemple, un engrenage ou une courroie ou un système équivalent) peut commander la rotation des deux rouleaux. Au cours d'un cycle d'aboutage des bandes de caoutchouc, la vitesse respective de chaque rouleau garantit l'épaisseur généralement constante d'une bande de caoutchouc aboutée sortant le système de rouleaux 20, tout en facilitant l'alignement et l'adhésion des bandes de caoutchouc alimentées au système 10.

En se référant encore aux figures 1 à 4, et particulièrement à la figure 4, un exemple d'un cycle d'un procédé d'aboutage de l'invention est décrit en utilisant le système 10 avec les rouleaux 22, 24. En lançant un cycle du procédé d'aboutage des bandes de caoutchouc, le procédé d'aboutage comprend une étape de fournissement d'au moins une première bande de caoutchouc B1 et une deuxième bande de caoutchouc B2. Il est entendu que les deux bandes B1, B2 sont utilisées par titre d'exemple et que deux ou plusieurs bandes de caoutchouc peuvent être introduites au système 10 pendant cette étape. Les propriétés des deux bandes de caoutchouc B1, B2 sont différentes et elles sont choisies en fonction d'une recette de mélange de caoutchouc sélectionnée. Il est entendu que les bandes de caoutchouc peuvent être fournies sur des palettes correspondantes (ou par d'autres moyens équivalents) qui identifient les propriétés matérielles de chaque bande de caoutchouc (par exemple, par code RFID, par code à barres, par moyens auto-apprentissages et/ou par d'autres moyens équivalents connus). Le procédé d'aboutage comprend en outre une étape de mise en rotation les rouleaux 22, 24 (voir les flèches de la figure 4). Cette étape peut comprendre l'étape de mise en acheminement de la tapis d'entrée 12a et/ou le tapis de sortie 14a. Dans tous les modes de réalisation du système 10, la vitesse de rotation de chaque rouleau peut être variable pendant le cycle.

Le procédé d'aboutage comprend en outre une étape d'alimentation des deux bandes de caoutchouc B1, B2 sur le tapis d'entrée 12a déjà en acheminement (voir la flèche B de la figure 1). Dans les modes de réalisation du système 10 comprenant une entrée d'alimentation 50, l'entrée d'alimentation permet l'introduction des bandes de caoutchouc sur le tapis d'entrée 12a au système de rouleaux 20. La première bande de caoutchouc B1 inclut une surface d'appui B1a qui sera introduite au système de rouleaux 20 de façon que la surface dentée 22b du rouleau supérieur 22 s'engage la surface d'appui B1a pendant le procédé d'aboutage des deux bandes de caoutchouc. La deuxième bande de caoutchouc B2 inclut une surface d'appui B2a qui sera introduite au système de rouleaux 20 de façon que la surface lissée 24b du rouleau inférieur 24 s'engage la surface d'appui B2a pendant le procédé d'aboutage des deux bandes de caoutchouc. Chaque bande de caoutchouc B1, B2 inclut une surface opposée correspondante B1b, B2b qui sera introduite au système de rouleaux de façon que les deux surfaces opposées face l'une à l'autre pendant cette étape d'alimentation. Chaque bande de caoutchouc B1, B2 comprend une épaisseur prédéterminée respective définie entre une surface d'appui B1a, B2a et une surface opposée B1b, B2b correspondante. Le procédé d'aboutage comprend en outre une étape d'aboutage des deux bandes de caoutchouc B1, B2. Cette étape comprend l'étape de passage simultané des deux bandes de caoutchouc B1, B2 vers l'écartement E₂₀ entre la surface dentée 22b du rouleau supérieur 22 et la surface lissée 24b du rouleau inférieur 24. Au cours de l'étape d'aboutage des bandes de caoutchouc B1, B2, le rouleau supérieur 22 maintient la première bande de caoutchouc B1 le long d'une ligne de contact tangentielle, avec la surface d'appui B1a de la première bande de caoutchouc engagée par les dents 22b' sans perçage de la première bande de caoutchouc. Au cours de l'étape d'aboutage des bandes de caoutchouc B1, B2, le rouleau inférieur 24 maintient la deuxième bande de caoutchouc B2 le long d'une ligne de contact tangentielle, avec la surface d'appui B2a de la deuxième bande de caoutchouc engagée par la surface lissée 24b. Au cours de l'étape d'aboutage des bandes de caoutchouc B1, B2, les surfaces opposées B1b, B2b des deux bandes de caoutchouc respectives sont maintenues le long d'une ligne de contact pour que les deux bandes de caoutchouc puissent s'engager le long des surfaces opposées sans perçage de l'une de l'autre.

Au cours de l'étape d'aboutage, le système 10 réalise, sans interruption du convoyeur, l'aboutage de la fin de la première bande de caoutchouc B 1 avec le début de la deuxième bande de caoutchouc B2. Il est entendu que l'aboutage peut être réalisé pour les bandes de caoutchouc d'une palette commune et/ou pour les bandes de caoutchouc des palettes successives. Une jonction effectuée entre la fin d'une première bande de caoutchouc et un début d'une deuxième bande de caoutchouc ne perce ni la première bande ni la deuxième bande. Ainsi l'aboutage obtenu permet l'utilisation d'une grande longueur de bande de caoutchouc (par exemple, deux ou plusieurs palettes) dans un procédé aval sans intervention d'un opérateur.

Les bandes de caoutchouc maintenant aboutées forment une bande complexée B 12 qui comprend toutes les propriétés matérielles des deux bandes de caoutchouc. Pendant l'étape d'aboutage, la rotation de chaque rouleau 22, 24 est effectuée de manière à conserver un contact uniforme entre la surface opposée B1b de la première bande de caoutchouc B1 et la surface opposée B2b de la deuxième bande de caoutchouc B2. Ainsi, la pression est appliquée uniformément de manière maîtrisable à éliminer des perçages indésirables dans la bande complexée B12.

Le procédé d'aboutage comprend en outre une étape de sortie de la bande complexée du système de rouleaux 20. Une fois que les bandes de caoutchouc B1, B2 sont assemblées et aboutées en tant que produit complexé, le système de rouleaux 20 dirige la bande complexée B12 vers le tapis de sortie 14a (déjà en acheminement) pour traitement à une installation en aval qui effectue une étape de mélangeage (par exemple, une installation de mélangeage comprenant au moins une extrudeuse) (voir la flèche C de la figure 1).

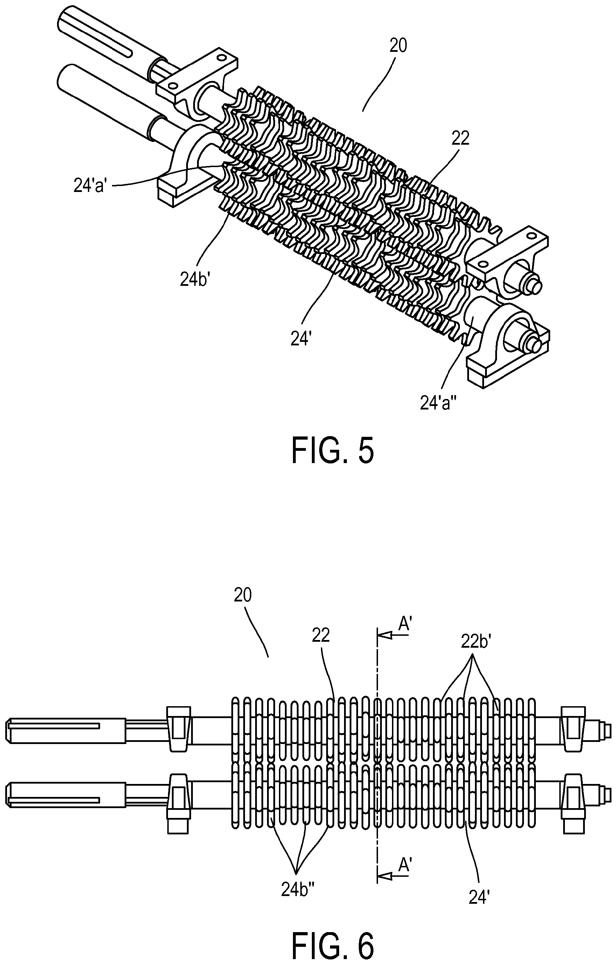

En se référant aux figures 5 à 7, où les mêmes numéros identifient les mêmes éléments, un autre mode de réalisation du système de rouleaux 20 est représenté qui est utilisable dans le système 10 de la figure 1. Dans ce mode de réalisation, le système de rouleaux 20 inclut un rouleau supérieur 22 comme décrit au-dessus. Le système de rouleaux 20 comprend aussi un rouleau inférieur 24' qui présente une surface dentée complémentaire 24b' le long de laquelle une longueur de contact est établie entre une bande de caoutchouc alimentée et la surface dentée du rouleau inférieur lors du passage de la bande de caoutchouc à travers le système de rouleaux 20. La surface dentée complémentaire 24b' du rouleau inférieur 24b' comprend plusieurs dents 24b" fixées entre deux extrémités opposées 24'a', 24'a" d'un corps cylindrique. Les dents 24b" sont consécutivement disposées le long d'un axe commun défini par rapport aux extrémités opposées 24'a', 24'a" de façon complémentaire par rapport aux dents 22b' du rouleau supérieur 22. Cette configuration du rouleau inférieur peut prendre une forme d'un pignon à chaine comme décrit au-dessus par rapport au rouleau supérieur 22.

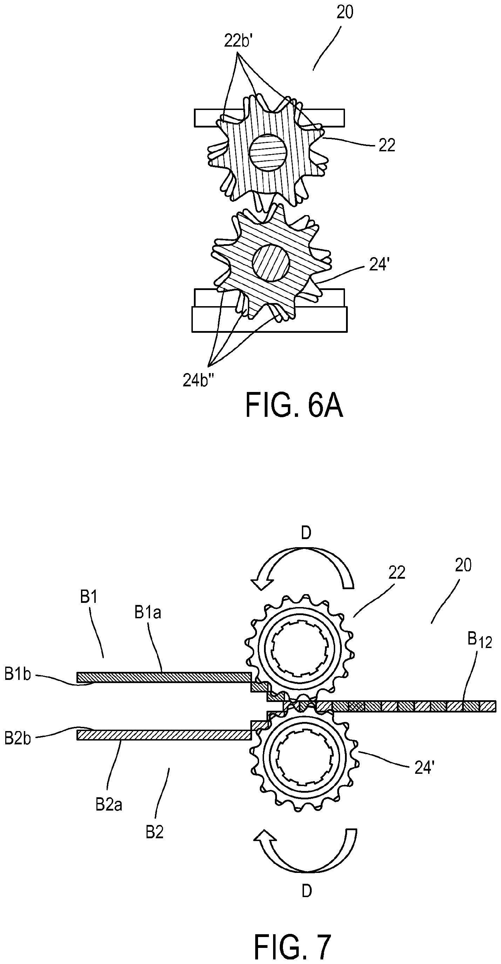

En se référant à la figure 7, un cycle d'un procédé d'aboutage utilisant ce mode de réalisation de l'invention est réalisé de même façon comme décrit au-dessus par rapport au mode de réalisation de figures 2 à 4 (les sens de rotation des deux rouleaux 22, 24' sont indiqués par les flèches D de la figure 7). Chaque surface d'appui B1a, B2a d'une bande de caoutchouc respective B1, B2 est engagée par une surface dentée respective 22b, 24b' pour former la bande complexée B12. La pression est encore appliquée uniformément de manière maîtrisable à éliminer des perçages indésirables dans la bande complexée B12.

Dans tous les modes de réalisation du procédé d'aboutage de l'invention, le procédé d'aboutage peut comprendre en outre une étape d'ajustement de l'écartement E₂₀ (soit entre la surface dentée 22b du rouleau supérieur 22 et la surface lissée 24b du rouleau inférieur 24, soit entre la surface dentée 22b du rouleau supérieur 22 et la surface dentée complémentaire 24b' du rouleau inférieur 24'). Pendant cette étape, l'écartement entre les rouleaux peut être variable pendant le cycle d'un procédé d'aboutage.

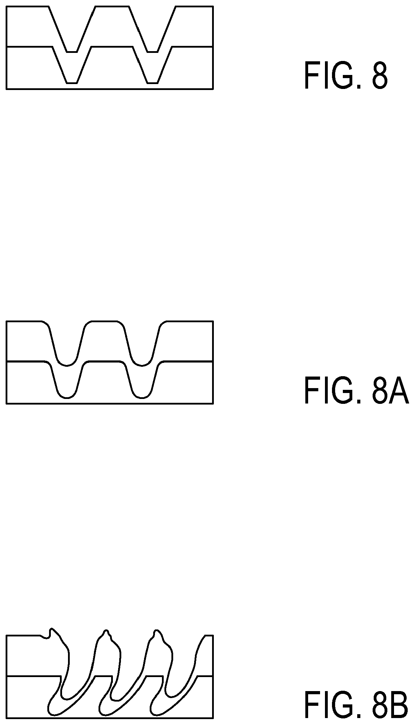

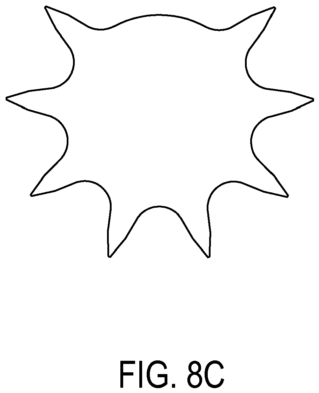

En se référant aux figures 8, 8A et 8B, chaque série de dents 22b', 24b" peut comporter une géométrie en section transversale prédéterminée. Dans les modes de réalisation illustratifs représentés, des bandes complexées de géométries variées sont réalisées à partir des bandes de caoutchouc aboutées par le système 10. De telles géométries sélectionnées comprennent une configuration en forme de V (voir la figure 8), une configuration en forme de U (voir la figure 8A) et une configuration en forme cambrée (voir la figure 8B). Il est toutefois entendu que l'on pourrait lui substituer d'autres géométries. Dans un mode de réalisation de l'invention, une dent est supprimée localement quel que soit la géométrie sélectionnée (voir la figure 8C à titre d'exemple). La suppression d'une dent permet à une bande de caoutchouc de passer sans aboutage de gomme sans arrêt du procédé en cours.

Le système 10 peut également comporter au moins un capteur (pas représenté) qui réalise une étape de détection d'une épaisseur de la bande complexée B 12 sortant le système de rouleaux et de détermination d'une valeur détectée de l'épaisseur par rapport à une épaisseur de référence de l'épaisseur (par exemple, en déterminant la conformité à une ou plusieurs spécifications pour la bande complexée B 12). Le capteur peut être disposé juste en amont les rouleaux du système de rouleaux 20 de manière à détecter l'épaisseur de chaque bande de caoutchouc entrante au système de rouleaux. Le capteur peut donc indiquer si un ajustement de l'écartement E₂₀ est nécessaire pour assurer une épaisseur de bande complexée généralement constante avant l'alimentation de la bande complexée à une extrudeuse (ou à une autre installation) en aval.

Le système 10 peut être un système parmi plusieurs systèmes qui forment ensemble au moins une partie d'un système de production de pneumatiques, dont une ou plusieurs peuvent être commandées par une ou plusieurs unités de commande programmables. Un cycle d'un procédé d'aboutage de l'invention peut être fait par la commande du PLC et peut inclure des pré-programmations des informations de gestion. Par exemple, un profil peut être associé avec la bande complexée qui est fourni par le système 10, y compris les propriétés matérielles de la bande complexée en sortant du système.

Pour toutes les réalisations, un système de surveillance pourrait être mis en place. Au moins une partie du système de surveillance peut être fournie dans un dispositif portable tel qu'un dispositif de réseau mobile (par exemple, un téléphone mobile, un ordinateur portable, un ou des dispositifs portables connectés au réseau (y compris des dispositifs « réalité augmentée » et/ou « réalité virtuelle », des vêtements portables connectés au réseau et/ou toutes combinaisons et/ou tous équivalents).

Dans des modes de réalisation de l'invention, le système 10 peut recevoir des commandes vocales ou d'autres données audio représentant, pour exemple, une démarche ou un arrêt de rotation des rouleaux du système de rouleaux 20. La demande peut inclure une demande pour l'état actuel d'un cycle de procédé d'aboutage. Une réponse générée peut être représentée de manière audible, visuelle, tactile (par exemple, en utilisant une interface haptique) et/ou virtuelle ou augmentée.

Dans un mode de réalisation, le procédé peut comprendre une étape d'entraînement du système 10 (ou d'entraînement d'un système qui incorpore le système 10) pour reconnaître des valeurs représentatives d'une bande complexée en sortant du système 10 (par exemple, d'une valeur d'épaisseur) et pour faire une comparaison avec des valeurs ciblés. Cette étape peut inclure l'étape d'entraînement du système à reconnaître non-équivalence entre les valeurs comparées. Chaque étape de l'entraînement inclut une classification générée par moyens d'auto-apprentissage. Cette classification peut inclure, sans limitation, les paramètres des matières des bandes de caoutchouc sélectionnées en fonction de la recette de mélange choisie. L'invention préserve une productivité optimale en conservant les diverses propriétés du caoutchouc. En même temps, l'invention évite les perçages associés avec les solutions existantes. Ainsi, un seul système est fourni qui est adaptable de traiter une variété de mélanges sans changement d'équipement dans un système de production de pneumatiques Les termes « au moins un(e) » et « un(e) ou plusieurs» sont utilisés de manière interchangeable. Les gammes qui sont présentées comme se situant « entre a et b » englobent les valeurs « a » et « b ».

Bien que des modes de réalisation particuliers de l'appareil révélé aient été illustrés et décrits, on comprendra que divers changements, additions et modifications peuvent être pratiqués sans s'écarter de l'esprit ni de la portée du présent exposé. Par conséquent, aucune limitation ne devrait être imposée sur la portée de l'invention décrite à l'exception de celles exposées dans les revendications annexées.

## Revendications

1. Système (10) d'aboutage de deux ou plusieurs bandes de caoutchouc (B1, B2) sélectionnées en fonction d'une recette de mélange de caoutchouc prédéterminée pour alimenter au moins une extrudeuse avec une bande complexée de matériau caoutchouteux (B₁₂) à partir des bandes de caoutchouc aboutées, dans lequel le système comprend :
au moins un convoyeur qui réalise le transport des bandes de caoutchouc d'une entrée (12) du système vers une sortie (14) du système d'aboutage ;
une armature (18) qui supporte le convoyeur de manière opérationnelle pour permettre le transport en continu des bandes de caoutchouc et pour permettre aussi l'aboutage simultané des bandes de caoutchouc alimentées au système ; et **caractérisé en ce que** un système de rouleaux (20) qui réalise l'aboutage des bandes de caoutchouc sans perçage, le système de rouleaux comprenant au moins un rouleau supérieur (22) et un rouleau inférieur (24, 24'), chaque rouleau avec un centre à travers lequel un axe de rotation du rouleau s'étend et chaque rouleau avec un corps cylindrique de diamètre prédéterminé qui s'étend perpendiculairement et qui tourne autour de son axe de rotation par rapport à l'armature (18) qui supporte le système de rouleaux (20), les deux rouleaux (22, 24) étant disposés de sorte que les deux axes de rotations restent dans le même plan avec les axes parallèles l'un par rapport à l'autre, le rouleau supérieur (22) avec une surface dentée (22b) le long de laquelle une longueur de contact est établie entre une première bande de caoutchouc alimentée (B1) et
la surface dentée lors du passage de la première bande de caoutchouc (B1) à travers le système de rouleaux (20), la surface dentée (22b) comprenant plusieurs dents (22b') consécutivement disposées le long d'un axe commun défini par rapport à deux extrémités opposées (22a', 22a") du corps cylindrique (22a) du rouleau supérieur, et le rouleau inférieur (24) avec une surface lissée (24b) le long de laquelle une longueur de contact est établie entre une deuxième bande de caoutchouc alimentée (B2) et la surface lissée lors du passage de la deuxième bande de caoutchouc à travers le système de rouleaux (20), la surface lissée 24b comprenant une surface circonférentielle qui présente une surface d'appui entre deux extrémités opposées (24a', 24a") du corps cylindrique (24a) du rouleau inférieur.

2. Système (10) de la revendication 1, dans lequel le rouleau inférieur (24') comprend une surface dentée complémentaire (24b') le long de laquelle une longueur de contact est établie entre la deuxième bande de caoutchouc alimentée (B2) et la surface dentée du rouleau inférieur lors du passage de la deuxième bande de caoutchouc à travers le système de rouleaux (20), la surface dentée complémentaire (24b') comprenant plusieurs dents (24b") consécutivement disposées le long d'un axe commun défini par rapport aux extrémités opposées (24'a', 24'a") du corps cylindrique du rouleau inférieur (24') de façon complémentaire par rapport aux dents (22b') du rouleau supérieur (22).

3. Système (10) de la revendication 1 ou de la revendication 2, dans lequel les deux rouleaux maintenant un écartement ajustable (E₂₀) entre la surface dentée (22b) du rouleau supérieur (22) et une surface (24b, 24b') du rouleau inférieur (24, 24').

4. Système (10) de l'une quelconque des revendications précédentes, dans lequel le convoyeur comprend un tapis d'entrée (12a) qui réalise l'entrée des bandes de caoutchouc à l'entrée (12) du système et un tapis de sortie (14a) qui réalise le transport des bandes de caoutchouc aboutées de la sortie (14) du système vers un ou plusieurs installations en aval du système.

5. Système (10) de l'une quelconque des revendications précédentes, comprenant en outre une entrée d'alimentation (50) à laquelle les bandes de caoutchouc sont fournies au système par rapport à l'armature (18) qui supporte entrée d'alimentation (50).

6. Procédé d'aboutage des bandes de caoutchouc réalisé par un système (10) de l'une quelconque des revendications précédentes, le procédé comprenant les étapes suivantes :
l'étape de fourniture d'au moins une première bande de caoutchouc (B1) et une deuxième bande de caoutchouc (B2), chaque bande de caoutchouc avec les propriétés matérielles choisies en fonction d'une recette de mélange de caoutchouc sélectionnée ;
l'étape de la mise en rotation des rouleaux supérieur et inférieur dans des sens opposés ;
l'étape de la mise en acheminement du convoyeur ;
l'étape de l'alimentation des deux bandes de caoutchouc (B1, B2) sur le convoyeur à l'entrée (12) du système(10) ;
l'étape de l'aboutage des deux bandes de caoutchouc (B1, B2) pour former la bande complexée (B₁₂), cette étape comprenant l'étape du passage simultané des deux bandes de caoutchouc (B1, B2) entre le rouleau supérieur et le rouleau inférieur de manière à conserver un contact uniforme entre une surface opposée (B1b) de la première bande de caoutchouc (B1) et une surface opposée (B2b) de la deuxième bande de caoutchouc (B2) sans perçage de l'une de l'autre ; et
l'étape de la sortie de la bande complexée du système de rouleaux (20).

7. Procédé de la revendication 6, dans lequel l'étape d'aboutage comprend l'aboutage de la fin de la première bande de caoutchouc (B1) avec le début de la deuxième bande de caoutchouc (B2) sans interruption du convoyeur et de sorte qu'une jonction effectuée entre la fin de la première bande de caoutchouc et le début de la deuxième bande de caoutchouc ne perce ni la première bande de caoutchouc ni la deuxième bande de caoutchouc.

8. Procédé de la revendication 6 ou de la revendication 7, comprenant en outre l'étape d'ajustement d'un écartement (E₂₀) entre le rouleau supérieur et le rouleau inférieur.

9. Procédé de l'une quelconque des revendications 6 à 8, comprenant en outre l'étape d'entraînement du système 10 pour reconnaître des valeurs représentatives d'une bande complexée (B₁₂) en sortant du système (10).

## Patentansprüche

1. System (10) zum Stoßverbinden von zwei oder mehr Kautschukstreifen (B1, B2), die in Abhängigkeit von einem vorbestimmten Kautschukmischungsrezept ausgewählt sind, zum Beschicken mindestens eines Extruders mit einem aus stoßverbundenen Kautschukstreifen zusammengesetzten Kautschukmaterialstreifen (B₁₂), wobei das System umfasst:
mindestens einen Förderer, der den Transport der Kautschukstreifen von einem Einlauf (12) des Systems zu einem Auslauf (14) des Stoßverbindungssystems ausführt;
ein Traggerüst (18), das den Förderer operativ stützt, um den Endlostransport der Kautschukstreifen zu ermöglichen und um auch das gleichzeitige Stoßverbinden der dem System zugeführten Kautschukstreifen zu ermöglichen; und **dadurch gekennzeichnet, dass** ein Walzensystem (20), das das Stoßverbinden der Kautschukstreifen ohne Durchstoßen ausführt, wobei das Walzensystem mindestens eine obere Walze (22) und eine untere Walze (24, 24') umfasst, jede Walze mit einem Mittelpunkt, durch den hindurch sich eine Rotationsachse der Walze erstreckt, und jede Walze mit einem zylindrischen Körper mit vorbestimmtem Durchmesser, der sich senkrecht erstreckt und der um seine Rotationsachse in Bezug auf das Traggerüst (18) dreht, welches das Walzensystem (20) stützt, wobei die beiden Walzen (22, 24) so angeordnet sind, dass die beiden Rotationsachsen in der gleichen Ebene mit den parallel zueinander verlaufenden Achsen bleiben, die obere Walze (22) mit einer gezahnten Oberfläche (22b), entlang der eine Kontaktlänge zwischen einem zugeführten ersten Kautschukstreifen (B1) und der gezahnten Oberfläche beim Durchlaufen des ersten Kautschukstreifens (B1) durch das Walzensystem (20) hindurch hergestellt wird, wobei die gezahnte Oberfläche (22b) mehrere Zähne (22b') umfasst, die hintereinander angeordnet sind entlang einer gemeinsamen Achse, die in Bezug auf zwei entgegengesetzte Enden (22a', 22a") des zylindrischen Körpers (22a) der oberen Walze definiert ist, und die untere Walze (24) mit einer geglätteten Oberfläche (24b), entlang der eine Kontaktlänge zwischen einem zugeführten zweiten Kautschukstreifen (B2) und der geglätteten Oberfläche beim Durchlaufen des zweiten Kautschukstreifens durch das Walzensystem (20) hindurch hergestellt wird, wobei die geglättete Oberfläche 24b eine umfängliche Oberfläche umfasst, die eine Auflagefläche zwischen zwei entgegengesetzten Enden (24a', 24a") des zylindrischen Körpers (24a) der unteren Walze aufweist.

2. System (10) nach Anspruch 1, bei dem die untere Walze (24') eine komplementär ausgebildete gezahnte Oberfläche (24b') umfasst, entlang der eine Kontaktlänge zwischen dem zugeführten zweiten Kautschukstreifen (B2) und der gezahnten Oberfläche der unteren Walze beim Durchlaufen des zweiten Kautschukstreifens durch das Walzensystem (20) hindurch hergestellt wird, wobei die komplementär ausgebildete gezahnte Oberfläche (24b') mehrere Zähne (24b") umfasst, die hintereinander entlang einer gemeinsamen Achse angeordnet sind, die in Bezug auf die entgegengesetzten Enden (24'a', 24'a") des zylindrischen Körpers der unteren Walze (24') definiert ist, auf komplementäre Weise in Bezug auf die Zähne (22b') der oberen Walze (22) .

3. System (10) nach Anspruch 1 oder Anspruch 2, bei dem die beiden Walzen einen verstellbaren Abstand (E₂₀) zwischen der gezahnten Oberfläche (22b) der oberen Walze (22) und einer Oberfläche (24b, 24b') der unteren Walze (24, 24') haltend.

4. System (10) nach einem der vorhergehenden Ansprüche, bei dem der Förderer ein Einlaufband (12a) umfasst, welches das Einlaufen der Kautschukstreifen im Einlauf (12) des Systems ausführt, und ein Auslaufband (14a), das den Transport der stoßverbundenen Kautschukstreifen vom Auslauf (14) des Systems zu einer oder mehreren nachgelagerten Anlagen des Systems ausführt.

5. System (10) nach einem der vorhergehenden Ansprüche, umfassend ferner einen Beschickungseinlauf (50), an dem die Kautschukstreifen dem System bereitgestellt werden in Bezug auf das Traggerüst (18), das den Beschickungseinlauf (50) stützt.

6. Verfahren zum Stoßverbinden der Kautschukstreifen, das von einem System (10) nach einem der vorhergehenden Ansprüche ausgeführt wird, wobei das Verfahren die folgenden Schritte umfasst: den Schritt des Bereitstellens mindestens eines ersten Kautschukstreifens (B1) und eines zweiten Kautschukstreifens (B2), jeder Kautschukstreifen mit Materialeigenschaften, die in Abhängigkeit von einem ausgewählten Kautschukmischungsrezept gewählt sind;
den Schritt des Indrehungversetzens der oberen und unteren Walzen in entgegengesetzte Richtungen; den Schritt des Versetzens des Förderers in den Förderbetrieb;
den Schritt des Zuführens der beiden Kautschukstreifens (B1, B2) auf dem Förderer im Einlauf (12) des Systems (10) ;
den Schritt des Stoßverbindens der beiden Kautschukstreifen (B1, B2) zum Bilden des zusammengesetzten Streifens (B₁₂), wobei dieser Schritt den Schritt des gleichzeitigen Durchlaufens der beiden Kautschukstreifen (B1, B2) zwischen der oberen Walze und der unteren Walze umfasst, so dass ein gleichförmiger Kontakt zwischen einer entgegengesetzten Oberfläche (B1b) des ersten Kautschukstreifens (B1) und einer entgegengesetzten Oberfläche (B2b) des zweiten Kautschukstreifens (B2) ohne Durchstoßen des einen des anderen beibehalten wird; und
den Schritt des Auslaufens des zusammengesetzten Streifens aus dem Walzensystem (20).

7. Verfahren nach Anspruch 6, bei dem der Schritt des Stoßverbindens das Stoßverbinden des Endes des ersten Kautschukstreifens (B1) mit dem Anfang des zweiten Kautschukstreifens (B2) ohne Unterbrechung des Förderers umfasst und so, dass eine zwischen dem Ende des ersten Kautschukstreifens und dem Anfang des zweiten Kautschukstreifens durchgeführte Verbindung weder den ersten Kautschukstreifen noch den zweiten Kautschukstreifen durchstößt.

8. Verfahren nach Anspruch 6 oder Anspruch 7, umfassend ferner den Schritt des Verstellens eines Abstands (E₂₀) zwischen der oberen Walze und der unteren Walze.

9. Verfahren nach einem der Ansprüche 6 bis 8, umfassend ferner den Schritt des Antreibens des Systems 10, um repräsentative Werte eines zusammengesetzten Streifens (B₁₂) beim Auslaufen aus dem System (10) zu erkennen.

## Claims

1. System (10) for butt-joining two or more rubber strips (B1, B2) selected in accordance with a predetermined rubber mixture recipe in order to feed at least one extruder with a complex strip of rubber material (B₁₂) made from the butt-joined rubber strips, wherein the system comprises:
at least one conveyor that transports the rubber strips from an inlet (12) of the system to an outlet (14) of the butt-joining system;
a frame (18) that operationally supports the conveyor to allow the continuous transport of the rubber strips and also to allow the simultaneous butt-joining of the rubber strips fed to the system; and
a roller system (20) that butt-joins the rubber strips without penetration, the roller system comprising at least one upper roller (22) and one lower roller (24, 24'), each roller having a center through which an axis of rotation of the roller extends and each roller having a cylindrical body of predetermined diameter that extends perpendicularly and rotates about its axis of rotation with respect to the frame (18) that supports the roller system (20), the two rollers (22, 24) being disposed such that the two axes of rotation remain in the same plane with the axes parallel to one another, and the upper roller (22) having a toothed surface (22b) along which a length of contact is established between a first fed rubber strip (B 1) and the toothed surface while the first rubber strip (B 1) passes through the roller system (20), the toothed surface (22b) comprising a plurality of teeth (22b') disposed consecutively along a common axis defined with respect to two opposite ends (22a', 22a") of the cylindrical body (22a) of the upper roller, and the lower roller (24) comprising a smooth surface (24b) along which a length of contact is established between a second fed rubber strip (B2) and the smooth surface while the second rubber strip passes through the roller system (20), the smooth surface 24b comprising a circumferential surface that has a bearing surface between two opposite ends (24a', 24a") of the cylindrical body (24a) of the lower roller.

2. System (10) according to claim 1, wherein the lower roller (24') comprises a complementary toothed surface (24b') along which a length of contact is established between the second fed rubber strip (B2) and the toothed surface of the lower roller while the second rubber strip passes through the roller system (20), the complementary toothed surface (24b') comprising a plurality of teeth (24b") disposed consecutively along a common axis defined with respect to the opposite ends (24'a', 24'a") of the cylindrical body of the lower roller (24') in a complementary manner with respect to the teeth (22b') of the upper roller (22).

3. System (10) according to claim 1 or claim 2, wherein the two rollers maintain an adjustable gap (E₂₀) between the toothed surface (22b) of the upper roller (22) and a surface (24b, 24b') of the lower roller (24, 24').

4. System (10) according to any one of the preceding claims, wherein the conveyor comprises an inlet belt (12a) that introduces the rubber strips at the inlet (12) of the system and an outlet belt (14a) that transports the butt-joined rubber strips from the outlet (14) of the system to one or more installations downstream of the system.

5. System (10) according to any one of the preceding claims, also comprising a feed inlet (50) at which the rubber strips are supplied to the system with respect to the frame (18) that supports feed inlet (50).

6. Process for butt-joining rubber strips that is carried out by a system (10) according to any one of the preceding claims, the process comprising the following steps:
a step of supplying at least one first rubber strip (B1) and one second rubber strip (B2), each rubber strip having the material properties chosen in accordance with a selected rubber mixture recipe;
a step of setting the upper and lower rollers in rotation in opposite directions;
a step of setting the conveyor into conveying operation;
a step of feeding the two rubber strips (B 1, B2) on the conveyor to the inlet (12) of the system (10);
a step of buttjoining the two rubber strips (B1, B2) to form the complex strip (B₁₂), this step comprising the step of simultaneously passing the two rubber strips (B 1, B2) between the upper roller and the lower roller so as to maintain uniform contact between an opposite surface (B1b) of the first rubber strip (B1) and an opposite surface (B2b) of the second rubber strip (B2) without one penetrating the other; and
a step of the complex strip exiting the roller system (20).

7. Process according to claim 6, wherein the butt-joining step comprises the butt-joining of the end of the first rubber strip (B 1) to the start of the second rubber strip (B2) without the conveyor being interrupted and such that a joint made between the end of the first rubber strip and the start of the second rubber strip does not penetrate the first rubber strip or the second rubber strip.

8. Process according to claim 6 or claim 7, also comprising a step of adjusting a gap (E₂₀) between the upper roller and the lower roller.

9. Process according to any one of claims 6 to 8, also comprising a step of training the system 10 to recognize representative values of a complex strip (B₁₂) exiting the system (10).
